# EUROPÄISCHE PATENTSCHRIFT

(11) **EP 2 075 185 B1**
(45) Veröffentlichungstag und Bekanntmachung des Hinweises auf die Patenterteilung: **16.06.2010**
(21) Anmeldenummer: 09158270.0
(22) Anmeldetag: 25.08.2003
(51) Int. Cl.: B62K 27/10

(54) **Körperaufnahme für ein fahrbares Rahmengestell**
Device for supporting the body of a child in a movable frame
Support pour enfant destiné à un cadre mobile

(30) Priorität: 10.09.2002 DE 10242198
(43) Veröffentlichungstag der Anmeldung: 01.07.2009
(62) Teilanmeldung aus: 03019144.9
(73) Patentinhaber: "Zwei plus zwei" Marketing GmbH, 50933 Köln (DE)
(72) Erfinder: Britton, Daniel, Calgary, Alberta T2H (CA); Gehlen, Andreas, 50933 Köln (DE)
(74) Vertreter: Lenzing Gerber Stute

(56) Entgegenhaltungen:
- EP-A- 0 339 890
- DE-U1- 9 215 797
- DE-U1- 20 107 010
- GB-A- 175 742
- US-A- 5 076 599

## Beschreibung

Die Erfindung betrifft einen Fahrradanhänger mit einem Rahmengestell mit einer Körperaufnahme zum Transport von Babys.

Der Transport von Kleinkindern und Babys in Fahrradanhängern ist nicht ohne weiteres möglich, da die Sitze der Fahrradanhänger hierfür nicht ausgelegt sind. Aufgrund des Mangels an geeigneten Lösungen für dieses Problem werden häufig für Autos konzipierte Babyschalen in Fahrradanhänger eingesetzt und darin mit Gurten befestigt. Zwar kann ein Kleinkind auf diese Weise grundsätzlich in einem Fahrradanhänger transportiert werden, allerdings besteht dabei der wesentliche Nachteil, dass die Babyschalen sehr klobig und in der Regel breiter als eine für ein Kind vorgesehene Sitzfläche sind. Dies ist insbesondere bei zweisitzigen Fahrradanhängern ein Problem, da bei Einsetzen der Babyschale in den Fahrradanhänger neben der Schale kaum noch Platz für ein zweites Kind, geschweige denn für eine zweite Babyschale verbleibt.

Die einzige im Markt erhältliche Möglichkeit zum Transport von Babys in einem Fahrradanhänger ist eine, den nächsten Stand der Technik bildende, harte Babyschale aus Polystyrol des deutschen Herstellers Weber Technik Werkzeugbau GmbH, die gegenüber den vorgenannten Babyschalen auf die Breite eines Kindersitzes eines Fahrradanhängers zugeschnitten ist. Diese Schale weist eine konkav ausgebildete Liegesitzfläche auf, deren Gesäßbereich gegenüber dem Rücken- und Schulterbereich abgeflacht ist. Knapp unterhalb des Gesäßbereichs der Schale sind in ihrer Mitte eine Durchgangsöffnung sowie in ihrem Schulterbereich zu beiden Seiten der zentralen Längsachse mehrere übereinander paarweise angeordnete Durchgangsöffnungen für die Gurte eines Rückhaltesystems zum Anschnallen des Babys vorgesehen. Darüber hinaus sind im oberen und im unteren Bereich der Schale Befestigungsöffnungen vorgesehen, durch die Schlaufen zur Befestigung der Babyschale auf einem Sitz des Fahrradanhängers hindurch gezogen werden können.

Auch diese Babyschale weist wesentliche Nachteile auf. Sie ist sperrig, wodurch die Befestigung der Babyschale in einem Sitz im Fahrradanhänger erschwert wird und eine platzsparende Lagerung, beispielsweise in einem Warenlager oder einer Garage nicht möglich ist. Die Babyschale ist starr, so dass sie sich nicht an die Lage und Bewegung eines Babys oder Kleinkindes anpassen kann. Schließlich ist die Schale nicht atmungsaktiv, was insbesondere an warmen Tagen oder bei langem Sitzen unangenehm ist.

Daher liegt der vorliegenden Erfindung die Aufgabe zu Grunde, eine Alternative zur zuvor beschriebenen Babyschale zur Verfügung zu stellen, mit der ein Transport von Babys in einem Fahrradanhänger ermöglicht wird und bei der die zuvor beschriebenen Nachteile nicht bestehen.

Diese Aufgabe wird gemäß den Merkmalen von Anspruch 1 gelöst.

Die Grundidee der Erfindung besteht darin, die Körperaufnahme aus einem flexiblen Material zu bilden, das bei Bedarf durch ein Verspannen des Materials von außen und/oder in sich selbst in die für den Transport des Körpers benötigte Form gebracht werden kann. Ein Verspannen von außen ist so zu verstehen, dass außerhalb der Körperaufnahme am Rahmengestell gelagerte Spannelemente so angeordnet sind, dass sie die Matte auf Zug belasten. In diesem Fall kommen als Spannelemente beispielsweise längenverstellbare federelastische Gurte in Betracht. Mit Verspannen "in sich selbst" ist gemeint, dass sich die Spannelemente beim Verspannen im Material selbst abstützen. Eine solche Verspannung ist beispielsweise mit Federstangen möglich, die in Hohlnähte, die in oder an der Matte vorgesehen sind, eingeschoben und unter Spannung in Verankerungspunkte der Matte eingesetzt werden, ähnlich wie bei einem selbsttragenden Kuppelzelt.

Die erfindungsgemäße Körperaufnahme weist gegenüber der eingangs beschriebenen Babyschale verschiedene Vorteile auf. So kann die flexible Matte bei Nichtgebrauch einfach zusammengefaltet und kompakt verstaut werden, nachdem die Spannelemente gelöst worden sind. Des weiteren weist sie selbst in ihrer Transportform eine gewisse Flexibilität auf, so dass sich die Matte bis zu einem gewissen Grad an eine Körperform anpassen kann. Hierdurch wird der Liege- bzw. Sitzkomfort erhöht, genauso wie dadurch, dass die flexible Matte teilweise oder ganz aus einem atmungsaktiven Material bestehen kann. Schließlich ist auch die Befestigung der Körperaufnahme in einem fahrbaren Rahmengestell, insbesondere in einem Fahrradanhänger, zumindest dann wesentlich einfacher, wenn sie zunächst befestigt und erst danach durch Spannelemente in ihre Transportform gebracht wird.

Es sind insbesondere in Höhe des Gesäßbereichs Wandungen angeordnet, die einem seitlichen Herausrutschen des bzw. der Körper entgegenwirken. Die Wandungen wirken insbesondere mit einem Rückhaltesystem, mit dem bereits ein Herausrutschen des bzw. der transportierten Körper aus der Körperaufnahme verhindert werden kann, zusammen, indem sie die Lage des Körpers stabilisieren.

Um den Komfort der Matte zu erhöhen, sind die Wandungen bevorzugt mit einer Polsterung versehen und/oder mit einem luftdurchlässigen Gewebe ausgebildet. Zur Stabilisierung der Seiten der Körperaufnahme sind vorzugsweise in Längsrichtung der Matte verlaufende Gurte vorgesehen, die grundsätzlich zwar in der Ebene der Stützfläche, die die Körperunterseite abstützt, angeordnet sein können, bevorzugt aber an den Oberkanten der Wandungen verlaufen. Gurte eignen sich insofern besonders gut zum Stabilisieren der Körperaufnahme, als sie stark auf Zug belastet werden können. Darüber hinaus ist es von Vorteil, wenn an den Enden der Gurte Befestigungselemente angeordnet sind, mit denen die Körperaufnahme beispielsweise in ein Rahmengestell eingehängt oder über Spannelemente darin verspannt werden kann.

Die in Längsrichtung angeordneten Gurte verlaufen vorzugsweise in schlauchartigen Hülsen, die bevorzugt aus einem geschäumten Material bestehen, so dass die Gurte abgepolstert sind. Es kann darüber hinaus von Vorteil sein, wenn die Gurte in den Hülsen befestigt, beispielsweise darin eingenäht oder eingeklebt sind. Die Hülsen können in längs zu beiden Seiten der Matte oder an den Oberkanten der Wandungen verlaufende Hohlnähte eingelassen sein.

Des weiteren ist es von Vorteil, wenn die Hülsen elastisch und insbesondere faltbar sind, damit sie zusammen mit der Matte kompakt zusammengefaltet oder gerollt werden können, ohne dass das Hülsenmaterial dabei beschädigt wird.

Auch sind die Hülsen bevorzugt in Längsrichtung gebogen und die Stützfläche in Arbeitsposition konkav vorgeformt. Eine Vorformung der Matte kann beispielsweise darin bestehen, dass die Wandungen und die Stützfläche so vernäht sind, dass sich beispielsweise ein gegenüber dem Rücken- und Schulterbereich abgewinkelter Gesäßbereich ergibt. Hierdurch wird die Montage und insbesondere das Verspannen der Körperaufnahme in die Transportform erleichtert.

In einer weiteren vorteilhaften Ausgestaltung ist die Vorderkante der Matte mit einer Polsterung versehen, die gegenüber der Stützfläche erhaben ist. Zum einen kann hiermit die Matte in Querrichtung stabilisiert werden. Zum anderen bietet die Polsterung besonderes während des Anschnallens eine Sicherung gegen ein Herausrutschen des Babys oder Kleinkindes.

Eine Stabilisierung der Matte quer zu ihrer Längsachse erfolgt vorzugsweise über einen auf der Rückseite der Matte befestigten, quer zu ihrer Längsrichtung verlaufenden Gurt, an dessen Enden Befestigungselemente angeordnet sind. Insbesondere wenn dieser Gurt im Gesäßbereich der Stützfläche angeordnet ist, kann die Körperaufnahme hierüber so verspannt werden, dass sich ein Winkel zwischen Gesäßbereich sowie Rücken- und Schulterbereich der Stützfläche ergibt, und zwar gerade dann, wenn die Matte in ihrer Längsrichtung an ihrer Ober- und Unterseite entsprechend verspannt ist. Alternativ hierzu ist es auch möglich, an der Rückseite auf jeder Seite der Matte je einen Gurt vorzusehen, mit denen die Matte nach hinten verspannbar ist.

Um die Position der Körperaufnahme und die zur Verspannung aufzubringenden Kräfte einstellen zu können, ist es von Vorteil, wenn die Länge der Gurte an mindestens einem ihrer Enden einstellbar ist.

Zur Erleichterung der Montage kann mindestens eines der Befestigungselemente als Schnellverschluss ausgebildet sein, der mit einem entsprechenden Gegenstück, das am Rahmengestell angeordnet ist, zusammenwirkt.

Um den Sitz- bzw. Liegekomfort zu erhöhen, sind die Oberflächen der Körperaufnahme zumindest teilweise, insbesondere im Bereich von Polsterungen, mit einem Vlies versehen.

Als besonders strapazierfähig werden bevorzugt Textilgewebe für die Matte verwendet. Insbesondere bietet es sich an, die Unterseite der Matte mit einem Textilgewebe auszustatten und in bevorzugter weiterer Ausbildung zur Polsterung eine Beschichtung aus einem geschäumten Kunststoff darauf aufzubringen. Auf diese Weise können im Bereich der Stützfläche sowohl die Anforderungen an die Materialfestigkeit als auch an den Komfort erfüllt werden, insbesondere dann, wenn die Beschichtung zusätzlich atmungsaktiv ist.

Als Rückhaltesystem zur Sicherung des zu transportierenden Körpers bei einem Stoß oder Aufprall des Rahmengestells können an der Matte Sicherheitsgurte vorgesehen sein, die insbesondere in den stabilisierten Bereichen der Matte, beispielsweise in den Bereichen von Längs- oder Quergurten, befestigt sind. Sofern am Rahmengestell bereits ein Rückhaltesystem vorgesehen ist, weist die Stützfläche bevorzugt Öffnungen für die Gurte des Rückhaltesystems auf. Die Anordnung der Öffnungen kann dabei wie bei der eingangs beschriebenen Babyschale sein.

Aus dem Vorstehenden ergibt sich, dass die Körperaufnahme vorzugsweise in einem Rahmengestell einer Fahrgastzelle eines Fahrradanhängers verwendet wird.

Im Folgenden wird die Erfindung anhand zweier Figuren, in denen ein bevorzugtes Ausführungsbeispiel der Erfindung dargestellt ist, näher beschrieben. Es zeigen
- Figur 1:: Einen Fahrradanhänger mit einer eingehängten Körperaufnahme in perspektivischer Darstellung; und
- Figur 2:: Einen Querschnitt der Körperaufnahme entlang der Schnittlinie II-II in Figur 1.

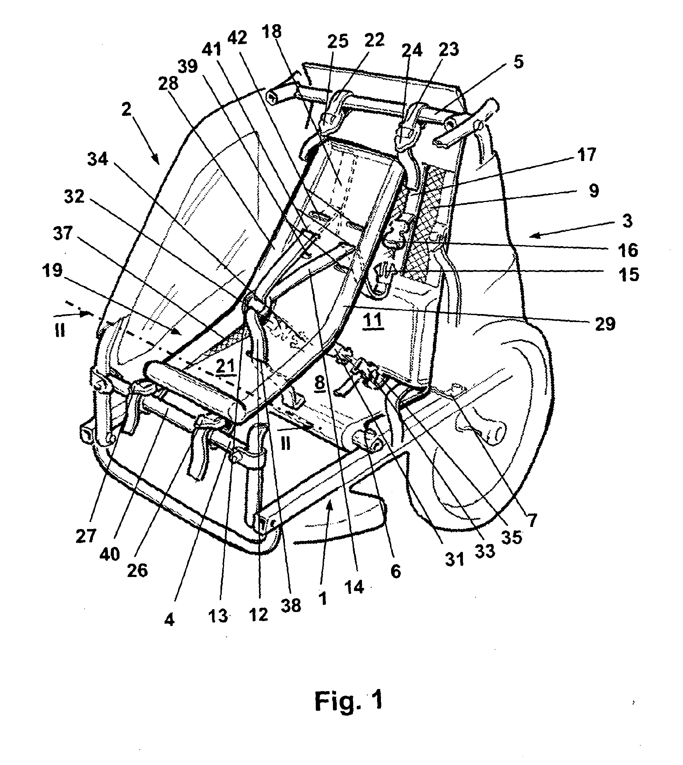

Der in Figur 1 dargestellte Fahrradanhänger weist als wesentliche Rahmenbestandteile ein Fahrgestell 1 sowie eine darauf angeordnete Fahrgastzelle mit einem die Vorder- und Oberseite der Fahrgastzelle bildenden Rahmenteil 2 und einer Fahrgastzellenrückseite 3 auf. Der Rahmenteil 2 weist an seiner Vorderseite eine oberhalb des Fahrgestells 1 angeordnete Querstrebe 4 auf, die wesentlich niedriger angeordnet ist als ein am oberen Ende der Fahrgastzellenrückseite vorgesehenes Querrohr **5.**

Am Fahrgestell **1** sind zwei hintereinander angeordnete Querträger **6, 7** vorgesehen, an denen unter anderem die Vorder- und die Hinterkante einer Sitzfläche **8** verankert ist. Zwischen dem hinteren Querträger **7** und einem an der Oberkante der Rahmenrückseite vorgesehenem Querrohr **5** ist eine Rückwand 9 eingespannt, an deren unteren Bereich eine gepolsterte Rückenlehne **11** angenäht ist. In der Mitte der Vorderkante der Sitzfläche **8** ist ein Basisgurt **12** eines Rückhaltesystems verankert, der über einen Ring **13** mit einem Schultergurt **14** zusammenwirkt, wobei beide Enden des Schultergurts **14** mit Schnappverschlüssen **15, 16** an der Rückwand **9** befestigt werden können. Die an der Rückwand **9** angeordneten Teile der Schnappverschlüsse **16** sind an nebeneinander angeordneten Gurten **17, 18** so befestigt, dass ihre Höhe einstellbar ist.

Zwischen der Querstrebe **4** und dem Querrohr **5** ist eine Körperaufnahme **19** mit einer eine Liegesitzfläche bildenden Matte **21** eingehängt. Die Körperaufnahme wird von zwei an ihrer Längsseite geführten Gurten **22, 23** gehalten, deren Enden als Schlaufen um die Querstrebe **4** bzw. das Querrohr 5 herumgeführt und mit Schnallen **24, 25, 26, 27** befestigt sind. Die Gurte sind in schlauchartigen Hülsen **28, 29** aus einem geschäumten Material geführt, die als Bestandteile seitlicher Wandungen der Körperaufnahme zur Sicherung gegen das Herausrutschen eines darin sitzenden Babys vorgesehen sind.

Die Körperaufnahme **19** wird über an der Rückseite zu beiden Seiten des Hüftbereichs der Matte **21** angeordnete Gurte **31, 32,** die über Verschlüsse **33, 34** mit am hinteren Querträger **7** befestigten Gurten **35** zusammenwirken, verspannt. Durch die Verspannung wird die Matte **21** im Hüftbereich abgewinkelt, so dass der Gesäßbereich gegenüber dem Rücken- und Schulterbereich flacher geneigt ist.

Zwischen den schlauchartigen Hülsen **28, 29** und der Matte **21** sind jeweils Textilnetze **37** eingesetzt, die sich in Längsrichtung zur Ober- und Unterkante der Körperaufnahme hin verjüngen, so dass die Wandungen insbesondere im Gesäßbereich erhöht sind.

In der Matte **21** sind Öffnungen zur Durchführung der Sicherheitsgurte des Rückhaltesystems vorgesehen, und zwar eine erste Öffnung **38** etwas unterhalb der Mitte des Gesäßbereichs zum Durchführen des Basisgurtes **12** einschließlich des daran befestigten Rings **13,** und übereinander angeordnete Öffnungspaare **39, 41, 42** zu beiden Seiten der zentralen Längsachse im Schulterbereich der Matte **21** zum Durchführen des Schultergurtes **14.**

Die Matte **21** schließt in ihrem unteren Bereich mit einer quer verlaufenden, gepolsterten Wulst **40** ab, mit der ein Baby oder Kleinkind insbesondere in der Zeit vor und während des Anschnallens gegen ein Herausrutschen aus der Körperaufnahme **19** gesichert ist.

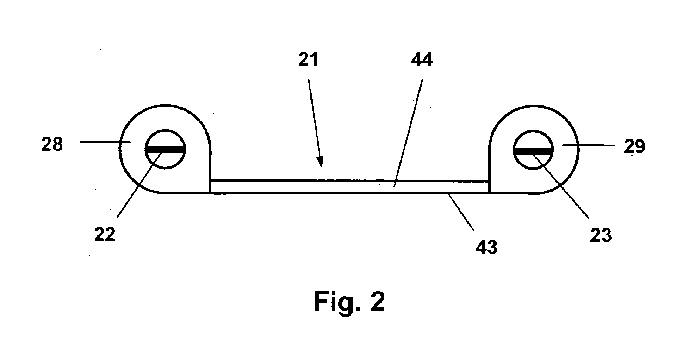

Insbesondere in dem in Figur 2 dargestellten Querschnitt der Körperaufnahme ist zu erkennen, dass die Gurte **22, 23** in den schlauchartigen Hülsen **28, 29** geführt sind. Die Unterseite der Matte **21** besteht aus einem Textilmaterial **41,** in das die schlauchartigen Hülsen **28, 29** zu beiden Seiten der Matte **21** eingenäht sind. Das Textilmaterial **43** ist auf seiner Oberseite zwischen den schlauchartigen Hülsen mit einer aufgeschäumten, atmungsaktiven Beschichtung **44** gepolstert.

## Patentansprüche

1. Fahrradanhänger mit einem Rahmengestell mit einer Körperaufnahme zum Transport von Babys, wobei die Körperaufnahme mit mindestens einem Befestigungselement im Rahmengestell befestigt ist und **gekennzeichnet ist durch** eine flexible Matte (21) und seitliche, in Längsrichtung der Matte (21) wirkende Spannelemente (22, 23, 31, 32), mit denen die flexible Matte (21) in die für den Transport eines Babys benötigte Transportform verspannt ist, und **durch** seitlich an der Matte (21), insbesondere in Höhe des Gesäßbereichs angeordnete Wandungen, die einem seitlichen Herausrutschen des Babys entgegenwirken.

2. Fahrradanhänger nach Anspruch 1, **dadurch gekennzeichnet, dass** die Wandungen mit einem luftdurchlässigen Gewebe (37) ausgebildet sind.

3. Fahrradanhänger nach Anspruch 1 oder 2, **gekennzeichnet durch** seitliche, in Längsrichtung der Matte (21) verlaufende Gurte (22, 23).

4. Fahrradanhänger nach Anspruch 3, **dadurch gekennzeichnet, dass** die Gurte (22, 23) an den Oberkanten der Wandungen verlaufen.

5. Fahrradanhänger nach Anspruch 3 oder 4, **dadurch gekennzeichnet, dass** die Gurte (22, 23) innerhalb von schlauchartigen Hülsen (28, 29) verlaufen.

6. Fahrradanhänger nach einem der Ansprüche 1 bis 5, **gekennzeichnet durch** einen bevorzugt auf der Rückseite der Matte (21) befestigten, quer zu ihrer Längsrichtung verlaufenden Gurt, an dessen Enden Befestigungselemente angeordnet sind.

7. Fahrradanhänger nach einem der Ansprüche 1 bis 5, **gekennzeichnet durch** je einen an der Rückseite der flexiblen Matte (21) auf jeder Seite der Matte (21) befestigten Gurt, mit denen die Matte (21) nach hinten verspannt ist.

8. Fahrradanhänger nach Anspruch 3 oder einem der darauf rückbezogenen Ansprüche 4 bis 7, **dadurch gekennzeichnet, dass** die Länge der Gurte (22, 23, 31, 32) an mindestens einem ihrer Enden einstellbar ist.

9. Fahrradanhänger nach einem der Ansprüche 1 bis 8, **dadurch gekennzeichnet, dass** die Oberflächen der Körperaufnahme zumindest teilweise, insbesondere im Bereich von Polsterungen, mit einem Vlies versehen sind.

10. Fahrradanhänger nach einem der Ansprüche 1 bis 9, **dadurch gekennzeichnet, dass** die Matte (21) mindestens teilweise aus einem Textilgewebe (43) besteht.

11. Fahrradanhänger nach einem der Ansprüche 1 bis 10, **dadurch gekennzeichnet, dass** die Körperaufnahme mit Mitteln zum Sichern des Babys versehen ist.

12. Fahrradanhänger nach Anspruch 11, **gekennzeichnet durch** Öffnungen (38, 39, 41, 42) in der Matte (21) zum Durchführen von am Rahmengestell oder an der Rückseite der Matte (21) befestigten Sicherheitsgurten (12, 14).

13. Fahrradanhänger nach Anspruch 11 oder 12, **gekennzeichnet durch** eine zentrale Öffnung (38) am unteren Ende des Gesäßbereichs der Körperaufnahme für einen zwischen den Beinen des Babys hindurchzuführenden Sicherheitsgurt (12).

14. Fahrradanhänger nach einem der Ansprüche 11 bis 13, **gekennzeichnet durch** mindestens ein Öffnungspaar (39, 41, 42), das ein Durchführen von Schultergurten (14) ermöglicht.

## Claims

1. Bicycle trailer with a frame with a body cradle to transport a baby, wherein the body cradle is fixed in the frame with at least one fixing element and is **characterised by** a flexible mat (21) and lateral clamping elements (22, 23, 31, 32) acting in the longitudinal direction of the mat (21) which clamp the flexible mat (21) in the transport form required for the transport of a baby, and by walls arranged laterally on the mat (21), in particular at the height of the seating area, which walls prevent the baby from slipping sideways.

2. Bicycle trailer according to claim 1, **characterised in that** the walls are formed with an air-permeable fabric (37).

3. Bicycle trailer according to claim 1 or 2, **characterised by** lateral straps (22, 23) running in the longitudinal direction of the mat (21).

4. Bicycle trailer according to claim 3, **characterised in that** the straps (22, 23) run on the upper edges of the walls.

5. Bicycle trailer according to claim 3 or 4, **characterised in that** the straps (22, 23) run inside hose-like sleeves (28, 29).

6. Bicycle trailer according to any one of claims 1 or 5, **characterised by** a strap preferably fixed to the back of the mat (21) and running transverse to its longitudinal direction, at the ends of which are arranged fixing elements.

7. Bicycle trailer according to any one of claims 1 to 5, **characterised by** a strap fixed on each side of the mat (21) to the back of the flexible mat (21), which straps clamp the mat (21) towards the back.

8. Bicycle trailer according to claim 3 or any one of claims 4 to 7 which refer back to this, **characterised in that** the length of the straps (22, 23, 31, 32) is adjustable at least at one end.

9. Bicycle trailer according to any one of claims 1 to 8, **characterised in that** the surfaces of the body cradle are at least partly, in particular in the area of the padding, provided with a fleece.

10. Bicycle trailer according to any one of claims 1 to 9, **characterised in that** the mat (21) consists at least partly of a textile fabric (43).

11. Bicycle trailer according to any one of claims 1 to 10, **characterised in that** the body cradle is provided with means for securing the baby.

12. Bicycle trailer according to claim 11, **characterised by** openings (38, 39, 41, 42) in the mat (21) for passage of safety straps (12, 14) fixed to the frame or to the back of the mat (21).

13. Bicycle trailer according to claim 11 or 12, **characterised by** a central opening (38) at the lower end of the seating area of the body cradle for a safety strap (12) to be passed between the legs of the baby.

14. Bicycle trailer according to any of claims 11 to 13, **characterised by** at least one pair of openings (39, 41, 42) which allow the passage of shoulder straps (14).

## Revendications

1. Remorque de bicyclette, comportant un bâti d'encadrement muni d'un réceptacle corporel en vue du transport de bébés, ledit réceptacle corporel étant fixé dans ledit bâti d'encadrement par au moins un élément de fixation, et étant **caractérisé par** une natte flexible (21) ; par des éléments latéraux de serrage (22, 23, 31, 32) qui agissent dans la direction longitudinale de ladite natte (21), et à l'aide desquels ladite natte flexible (21) est tendue pour prendre la configuration de transport requise pour le transport d'un bébé ; et par des parois qui, placées latéralement sur ladite natte (21), en particulier à la hauteur de la région du siège, préviennent une chute du bébé par ripage latéral.

2. Remorque de bicyclette, selon la revendication 1, **caractérisée par le fait que** les parois sont réalisées à l'aide d'un tissu (37) perméable à l'air.

3. Remorque de bicyclette, selon la revendication 1 ou 2, **caractérisée par** des sangles latérales (22, 23) s'étendant dans la direction longitudinale de la natte (21).

4. Remorque de bicyclette, selon la revendication 3, **caractérisée par le fait que** les sangles (22, 23) s'étendent sur les bords supérieurs des parois.

5. Remorque de bicyclette, selon la revendication 3 ou 4, **caractérisée par le fait que** les sangles (22, 23) s'étendent à l'intérieur de fourreaux (28, 29) du type boyaux souples.

6. Remorque de bicyclette, selon l'une des revendications 1 à 5, **caractérisée par** une sangle qui est fixée, de préférence, sur la face postérieure de la natte (21), s'étend transversalement vis-à-vis de sa direction longitudinale, et aux extrémités de laquelle des éléments de fixation sont disposés.

7. Remorque de bicyclette, selon l'une des revendications 1 à 5, **caractérisée par** une sangle respective fixée à la face postérieure de la natte flexible (21), sur chaque côté de ladite natte (21), et par laquelle ladite natte (21) est tendue vers l'arrière.

8. Remorque de bicyclette, selon la revendication 3 ou l'une des revendications 4 à 7 se rapportant à cette dernière, **caractérisée par le fait que** la longueur des sangles (22, 23, 31, 32) est réglable à au moins l'une de leurs extrémités.

9. Remorque de bicyclette, selon l'une des revendications 1 à 8, **caractérisée par le fait que** les surfaces du réceptacle corporel sont pourvues d'un non-tissé, au moins en partie, notamment dans la région de rembourrages.

10. Remorque de bicyclette, selon l'une des revendications 1 à 9, **caractérisée par le fait que** la natte (21) est, au moins en partie, constituée d'un tissu textile (43).

11. Remorque de bicyclette, selon l'une des revendications 1 à 10, **caractérisée par le fait que** le réceptacle corporel est doté de moyens conçus pour retenir fermement le bébé.

12. Remorque de bicyclette, selon la revendication 11, **caractérisée par** la présence, dans la natte (21), d'orifices (38, 39, 41, 42) destinés au passage de ceintures de sécurité (12, 14) fixées au bâti d'encadrement, ou à la face postérieure de ladite natte (21).

13. Remorque de bicyclette, selon la revendication 11 ou 12, **caractérisée par** un orifice central (38) pratiqué à l'extrémité inférieure de la région du siège du réceptacle corporel et dévolu à une ceinture de sécurité (12) devant être engagée, d'un trait, entre les jambes du bébé.

14. Remorque de bicyclette, selon l'une des revendications 11 à 13, **caractérisée par** au moins une paire d'orifices (39, 41, 42) autorisant un passage de sangles scapulaires (14).
